# EUROPEAN PATENT APPLICATION

(11) **EP 2 120 145 A1**
(43) Date of publication of application: **18.11.2009**
(21) Application number: 08155624.3
(22) Date of filing: 05.05.2008
(51) Int. Cl.: G06F 9/52

(54) **A method of controlling configuration change of an device and an electric device**

(71) Applicant: Telefonaktiebolaget LM Ericsson (PUBL), 164 83 Stockholm (SE)
(72) Inventor: Persson, Håkan, RG24 8XW Basingstoke (GB); Andrew, Philip, RG23 8NQ Basingstoke (GB); Brown, Dominic, RG22 4HU Basingstoke (GB)
(74) Representative: Bratt, Hanna Catharina

(57) **Abstract**

A method of controlling access rights for changing configuration of an electronic device is disclosed. The device comprises at least two subsystems, a mutex and a plurality of registers, wherein the subsystems share the same resource. The method comprises the steps of locking (106) the mutex by said first subsystem if a status of said mutex is free (102); checking (108) if the new configuration will adversely affect said second subsystem and if said checking shows that there is no adverse effect on said second subsystem then writing (116) said new configuration setting to a register for storing a configuration request.

## Description

### Technical Field

The present invention relates to Application Specific Integrated Circuit devices, in general, and in particular to a device and a method of controlling access rights for changing configuration of an electronic device comprising ASIC subsystems.

### Background

In modem digital devices in order to reduce cost it is desirable to integrate several systems within a single chip/device. Such devices employ several subsystems, each one with its own processors, and in many cases they exist as totally separate subsystems with their own clock generation and distribution architecture as well as separate external memory and independent, separate control.

In order to maintain low cost of the final product it is sometimes necessary to share a single external memory component or other resource. Independent subsystems with separate asynchronous clock generation make it difficult or inefficient to share certain resources. For example, it is difficult to implement an efficient shared memory interface in the case of asynchronous subsystems. Asynchronous subsystems also complicate design necessary to secure production tests for the ASIC. Additionally, the components needed to generate the higher speed internal clocks (PLLs - Phase Locked Loops) need to be duplicated within each subsystem, which increases the footprint of the device (especially as PLLs are typically large analog parts).

### Summary

According to a first aspect of the present invention there is provided a method of controlling access rights for changing configuration of an electronic device comprising at least two subsystems, a mutex and a plurality of registers. The subsystems share the same resource. The method comprises the steps of locking the mutex by said first subsystem if a status of said mutex is free, wherein locking said mutex prevents a second subsystem from attempting to change said configuration. In the next step it is checked if the new configuration will adversely affect said second subsystem and if said checking shows that there is no adverse effect on said second subsystem then said new configuration setting is written to a register for storing a configuration request.

According to a second aspect of the present invention there is provided an electronic device comprising at least two subsystems using the same operating parameters and a plurality of registers assigned to said subsystems. The registers are adapted to store a configuration request defining new configuration parameters for said subsystems as well as to store current state of corresponding subsystems. The device further comprises a mutex connected to each of said subsystems, wherein if said mutex is locked by a first subsystem said first subsystem is adapted to read a second register assigned to a second subsystem and used for storing current state of the second subsystem. Said first subsystem is further adapted to write new configuration parameters to said register for storing said configuration request if the new configuration parameters do not have adverse effect on said second subsystem.

Further features of the present invention are as claimed in the dependent claims.

One of the main benefits of this invention is that if a change needed by a first subsystem does not affect a second subsystem then the first subsystem does not need to agree this with the second subsystem. A typical example of this application is if the second subsystem is powered down, then the present invention defines a method for the first subsystem to detect this and change the configuration without any risk for race conditions. Additionally the present invention has the advantage over solutions known in the art that it provides a simple solution in which a change in power management, or change in configuration in general, have to be agreed by all the subsystems that will be affected by the change. In this way the present invention allows for effective use of a single external memory component or other resource shared by the subsystems. Additionally there is no need for duplication of some of the hardware components as it is the case in asynchronous subsystems. This leads to reduced cost and footprint of the final product.

### Brief description of the drawings

The present invention will be understood and appreciated more fully from the following detailed description taken in conjunction with the drawings in which:
FIG. 1 is a diagram illustrating a method in one embodiment of the present invention;
FIG. 2 - 10 present diagrams illustrating an electronic device in various embodiments of the present invention;

### Detailed description

In the case of a complex Application Specific Integrated Circuit the device can be split into a number of more or less independent subsystems. In the resulting ASIC device comprising in fact two or more subsystems some hardware resources may be shared between the subsystems. The resources to be shared include clock generation, access to external memory, power supply or other services. The present invention describes a method of solving problems in managing resources shared between the two or more subsystems. The solution resolves conflicts between the subsystems in a way that limits latency and power consumption when it is required to change the configuration of a shared resource.

As an illustration of one possible embodiment of the present invention managing control over shared clock generation will be discussed. The invention, however, is not limited to clock generation, but is also applicable to other shared resources. For example it can be also used to control of current supplies (voltage, voltage regulator low power mode, control of power supplies used by peripherals used by different subsystems). A digital signal processor (DSP) or other accelerator subsystem could also be considered such a resource. A DSP can be useful for many tasks (i.e. echo cancelling and voice codec for modem subsystem, mp3 decoding or video codecs for application subsystem) and the present invention is also applicable to these and other shared resources.

Clock generation is one of the most important shared resources. There are big advantages of keeping clock generation shared as it allows the subsystems to be implemented synchronous to each other (and this makes communication between the subsystems easier and more efficient). This, however, causes problems when power management is applied independently to the subsystems (i.e. the subsystems may independently be shut down or request different clock frequencies). Different clock frequencies may require different supply voltages (i.e. lower frequencies may work at a lower supply voltage). The higher the supply voltage the higher is the power consumption. Also, using an unnecessary high clock frequency generally increases power consumption even if the supply voltage is constant. When the common clock changes it may be necessary for each subsystem to reconfigure some of its components to ensure correct operation.

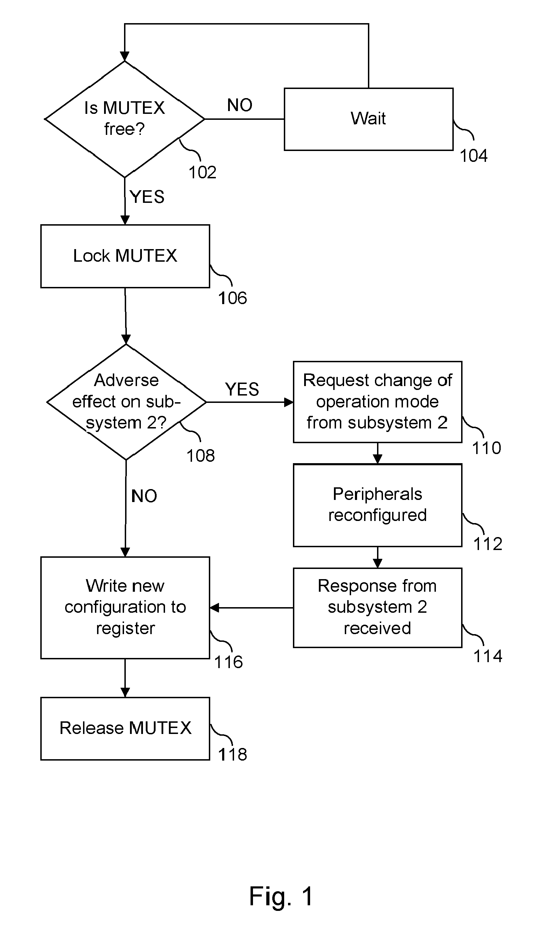

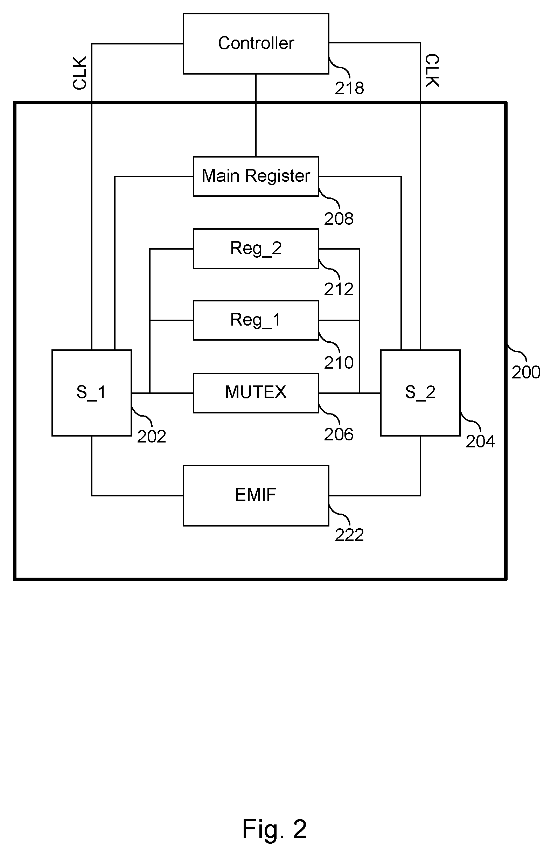

With reference to Fig. 1 and Fig. 2 one embodiment of a method of controlling access rights for changing configuration of an electronic device in accordance with the present invention is presented. In this embodiment only two more or less independent subsystems are discussed, but the invention is also applicable to devices with more than two subsystems. The electronic device 200 comprises two subsystems 202 and 204, which are located inside one ASIC 200, a mutex 206 and a plurality of registers 208, 210 and 212. In a preferred embodiment the mutex 206 and the registers are implemented in hardware as parts of the same ASIC 200. In alternative embodiments, however, it is possible to implement said mutex and registers in software or part of these in software and part in hardware. The two subsystems 202 and 204 share the same resource 218, which in the embodiment illustrated in Fig. 2 is a chip controller 218 responsible for clock generation for the first subsystem 202 and the second subsystem 204. In operation, if the first subsystem 202 intends to change configuration of the device 200 requesting different clock frequency from the controller 218 it has to check 102 if the state of the mutex is "free" and if the check shows that the mutex 206 is free the first subsystem locks 106 the mutex (or the mutex 206 is assigned to the first subsystem). Locking said mutex prevents the second subsystem from attempting to change said configuration. By doing that the possible race conditions are avoided. Only one of the plurality of subsystems can attempt modifying configuration at a time. If the mutex is not free (i.e. it is assigned to the second subsystem 204) the first subsystem 202 has to wait 104 for a predefined period of time and then performs the checking 102 once again until the mutex is free and can be assigned to the first subsystem 202. Alternatively, an IRQ (interrupt request) is generated when the mutex 206 is released by the present owner. The IRQ is generated when the mutex 206 is released to any subsystem that has so requested (i.e. tried to lock the mutex and failed). This implies a hardware implementation of the mutex in this particular embodiment of the present invention. However, as it was mentioned earlier software implementations, in general, are also possible. When the mutex 206 is assigned to the first subsystem 202 said first subsystem checks 108 if the new configuration will adversely affect said second subsystem 204. If said checking shows that there is no adverse effect on said second subsystem then said new configuration setting is written 116 to a main register 208. In this situation it is not required that the new configuration is first agreed between said first and second subsystems (i.e. it is not necessary for the first subsystem to request permission for a configuration change from the second subsystem). The controller 218 reads the entries in the main register in order to apply/change the configuration of the ASIC 200.

Preferably, once the new configuration is written to the main register 208 the mutex 206 is released and can be locked by another subsystem in order to change configuration. Alternatively, the mutex 206 can be released later, e.g. when the first subsystem 202 finishes its task.

Preferably the step of checking 108 what effect will have the new configuration on said second subsystem 204 comprises inspecting a second register 212 assigned to the second subsystem 204 for storing information about current state of the second subsystem 204.

It may, however, happen that the result of checking 108 shows that the new configuration will adversely affect the second subsystem 204. When both subsystems 202, 204 of the same ASIC 200 share the same clock generation resource the operating frequencies of one ASIC can depend on the clocking needs of the other subsystem. This means that the configuration of shared and private peripherals may need to be changed when the clock mode of a second subsystem 204 is forced to change due to the clock mode request of the first subsystem 202. In this case both subsystems have to first agree on when they can make certain clock mode transitions (or in general when the change of configuration can be implemented) in order to allow the private and shared peripherals to be reconfigured. A non-exhaustive list of peripherals includes MMC controller, SIM card controller, PCM interface, UART, Display interface, etc.

In order to obtain the agreement the first subsystem 202 requests 110 from said second subsystem 204 changing its mode of operation. This is required, as explained above, because the second subsystem may be using various peripherals (e.g. it may be accessing a memory via External Memory Interface - EMIF), and requires for this a specific clock frequency. This means that when operating mode of the device 200 changes it is necessary to reconfigure the memory interface and other peripherals that depend on the clock frequencies used in the system. In order to handle this in a safe way the changes must be agreed on by both subsystems 202 and 204 of the ASIC 200.

Such a change of configuration of peripherals requires time and the first subsystem 202 has to wait 114 for response from the second subsystem 204, wherein the response indicates that the peripherals that required reconfiguration have been reconfigured or are available to the first subsystem 202 to be reconfigured by said first subsystem 202. This indication means that once reconfiguration of peripherals is completed (whether by the second subsystem 204 or by the first subsystem 202) it is safe to modify configuration of said device 200.

In the final step, when the change is agreed by the two independent subsystems 202 and 204 said new configuration setting is written 116 to a main register 208.

Preferably a subsystem 202 when it exits sleep mode or when it is activated after being powered down examines the status of the other subsystem 204 and, if necessary, reconfigures its own peripherals before they are used. In a sleep mode the subsystem is not powered down, but is not requesting clock signal. When examining the status of the other subsystems it is always necessary to lock the mutex 206. As in the previous embodiment, if there are no cases where the second subsystem 204 will suffer ill effects from clock frequency changes due to changed clock modes from the application subsystem, then it is not necessary for the first subsystem 202 to request permission for a clock mode request change from the second subsystem 204. Although it is still necessary to use the mutex 206 when modifying the main register 208 to ensure that no race conditions occur.

Fig. 2 illustrates an electronic device 200 in one embodiment of the present invention.

The device 200, which in a preferred embodiment is a digital ASIC comprises two subsystems 202 and 204, that use the same clock frequency provided by an external controller 218. The device also comprises a main register 208, which is used for storing a configuration request defining new clock mode for the two subsystems 202 and 204 and two registers (a first register 210 and a second register 212) each assigned to one of said subsystems and used for storing a current state of a corresponding subsystem. The device 200 further comprises a mutex 206 connected to each of said subsystems 202, 204. If said mutex 206 is locked by the first subsystem 202 said first subsystem can read the second register 212 assigned to the second subsystem 204. In this way the first subsystem knows the status, or clock request of the second subsystem 204 and can check if the new clock request will have adverse effect on said second subsystem. The first subsystem 202 is further adapted to modify said main register 208 if the new configuration parameters (e.g. new clock frequency) do not have adverse effect on said second subsystem 204.

In a preferred embodiment the first subsystem 202 releases the mutex after writing the new configuration parameters into said main register 208.

If the new requested clock frequency has adverse effect on said second subsystem 204 the first subsystem 202 is adapted to request from the second subsystem 204 changing its mode of operation. The first subsystem 202 modifies said main register 208 only after receiving a response from the second subsystem. The response indicates that peripherals used by the second subsystem 204 are reconfigured and it is safe to change configuration of said electronic device 200. In alternative embodiment the second subsystem 204 can indicate that its peripherals can be reconfigured by the first subsystem 202.

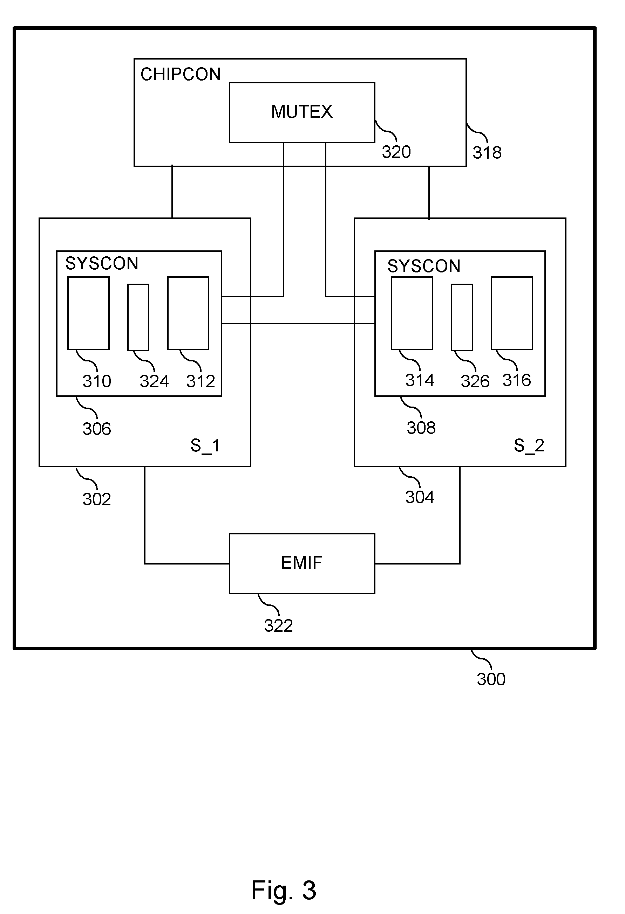

In an alternative embodiment illustrated in Fig. 3 each subsystem 302, 304 includes a system controller block (SysCon) 306, 308. The first subsystem 302 comprises a first system control block 306 and the second subsystem 304 comprises a second system control block 308. The first system control block 306 communicates with the second subsystem 304 and with a chip controller (ChipCon) 318. The SysCon block 306, 308 contains registers 310, 314 for requesting clock modes and other parameters of various configuration modes from the chip controller 318. The chip controller 318 is a central control block that manages the clock generation and power domain switching. In a preferred embodiment each system controller block 306, 308 has a request register 310, 314 and the chip controller 318 sets the highest frequency mode requested in any of these request registers 310, 314. The chip controller also comprises the mutex 320 that can be locked from any subsystem by using mutex status registers 324, 326 implemented in the system controller blocks 306 and 308 of each subsystems 302 and 304. The mutex 320 guards access to the clock mode request registers 310 and 314. In operation, if the mutex status register 324 of the first subsystem shows that the mutex 320 is assigned to said first subsystem 302 said first subsystem 302 can modify its clock mode request register 310.

The system control block 306 of the first subsystem 302 comprises a first clock mode register 312 in which clock mode in use and the status of the clock mode requests from the second subsystem 304 is recorded. The same is applicable to the second subsystem 304, which has a second clock mode register 316. The clock mode registers 312 allows the first subsystem to predict the effect of a change of its clock mode request, and thus make a decision if it is necessary to confirm the change with the second subsystem 304 or not.

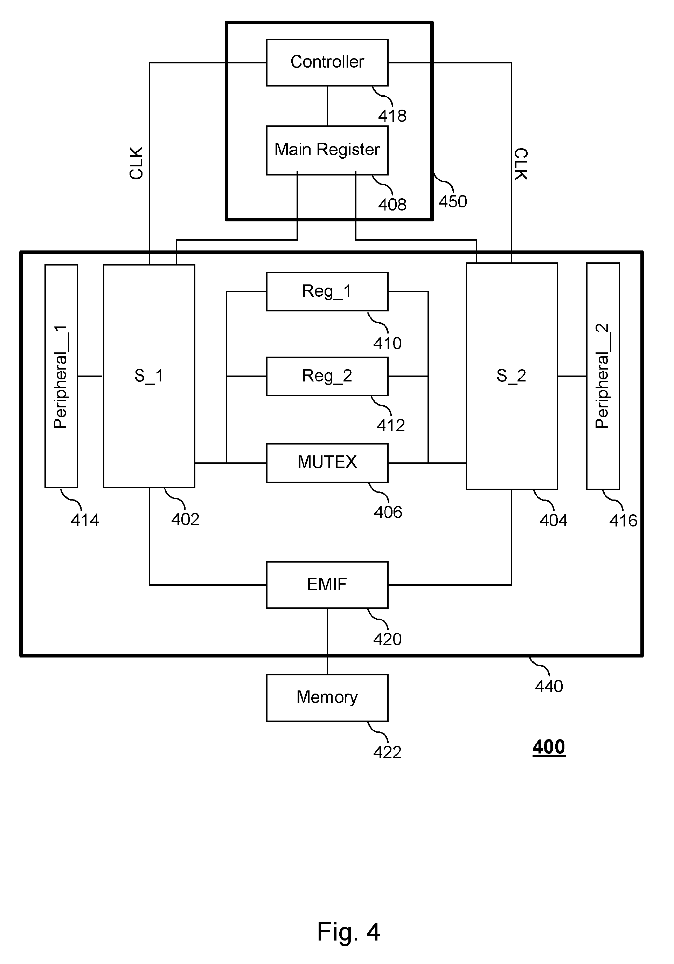

There are possible embodiments of the invention where the subsystems are parts of one ASIC device, e.g. as illustrated in Fig. 3, 5, 9 and 10. In alternative embodiments the electronic device 400, 600, 800 is, for example, a mobile telephone with implemented a number of ASICs as illustrated in Fig. 4, 6, 8. The advantage of implementing the present invention in a form of a single ASIC compared with implementations with plurality of separate ASICs is that the arrangement with separate ASICs requires a fairly large number of signals, which is of no concern within an ASIC, but generally expensive between two different ASICs. However, it would be feasible to use I2C, SlimBus or similar protocol for communication between the different ASICs.

It must be noted that there is a large number of different realizations of this solution, with different partitioning of the functionality between ASICs. Some of these embodiments are illustrated in Fig. 2 - Fig. 10. For the sake of clarity the drawings present embodiments of the invention in a very schematic way with elements and lines not essential for understanding the invention omitted.

Fig. 4 illustrates an electronic device 400 comprising two ASICs 440 and 450. Digital ASIC 440 comprises two subsystems 402 and 404 connected via bus interface to a mutex 406. There is also a first register 410 and a second register 412 both connected in parallel to the mutex 406. The first register 410 is used for storing information on the current state of the first subsystem 402 and the second register 412 is for storing information on current state of the second subsystem 404. The first 402 and second 404 subsystems are connected to a main register 408. The main register in this embodiment is part of a power management ASIC 450 and connections between the subsystems 402, 404 and the main register 408 are realised as I2C (Inter-Integrated Circuit ) interface. The second ASIC 450 (power management ASIC) also comprises a controller 418 connected to the main register 408 and providing, for example, clock signal CLK to the first and second subsystems. The main register 408 is used by both subsystems 402 and 404 for writing a configuration request defining new clock mode for the two subsystems 402 and 404. Writing the configuration request by one of the subsystems must be preceded by carrying the method of the invention as explained earlier in order to check if the new configuration will have adverse effect on the other subsystem. In the embodiment illustrated in Fig. 4 the digital ASIC also comprises External Memory Interface - EMIF 420 for accessing memory 422. EMIF 420 is a resource shared by the subsystems 402 and 404 and is connected via bus interfaces to both subsystems 402 and 404. In alternative embodiments it may be a different resource instead of the EMIF 420. In yet another embodiment the shared resource may be located outside the digital ASIC 440. Similarly Fig. 4 shows peripherals (or private resources) 414 and 416 connected to the first 402 and second 404 subsystems respectively and being part of the same digital ASIC 440. In alternative embodiments, however, these peripherals can be located outside the digital ASIC 440.

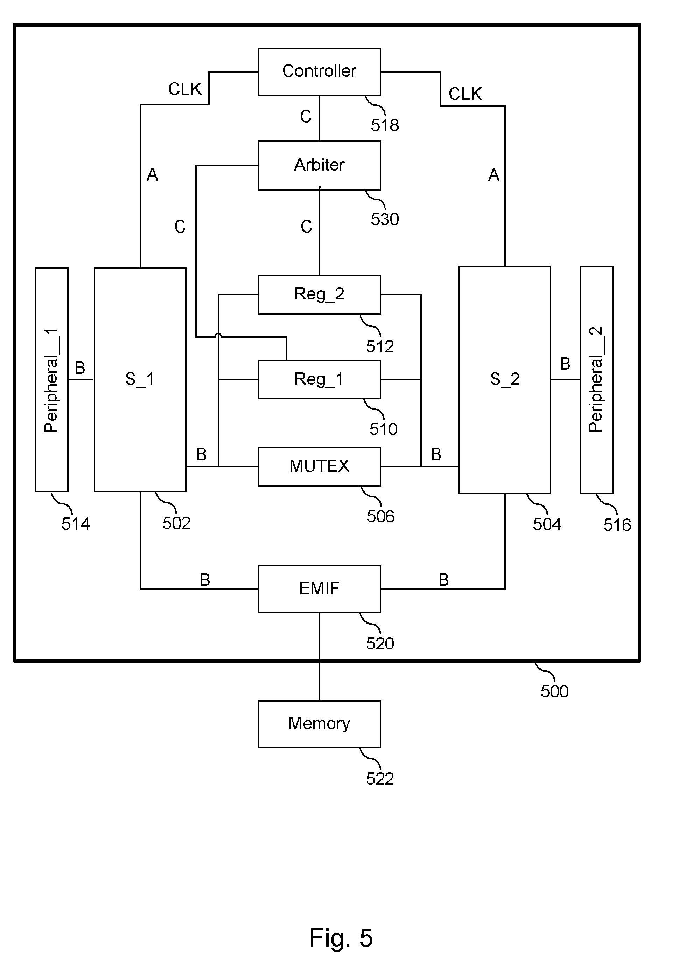

Fig. 5 illustrates an electronic device 500 where two subsystems 502 and 504 are located in one ASIC 500. Function and connection of the mutex 506 is the same as in the embodiment illustrated in Fig. 4. The device 500 also comprises two registers: first 510 and second 512, both connected in parallel to the mutex 506. The first register 510 is used to store current state of the first subsystem 502 as well as to store new configuration parameters requested by the first subsystem 502. Similarly, the second register 512 is used to store the current state of the second subsystem 504 as well as to store new configuration parameters requested by the second subsystem 504. Writing configuration requests to the registers is carried out according to the method of the present invention. The ASIC 500 also comprises an arbiter circuit 530 that reads the configuration requests and selects the operation mode with the higher clock frequency (in the case of clock frequency provided by the shared controller 518). Clock frequency here is just one example of embodiment, in general the arbiter 530 reads configuration requests stored in registers 510 and 512 and selects the most demanding configuration request (it can be the clock frequency, voltage or another parameter) to be applied in operation of the device 500. Connections and functions of remaining components: peripherals 514, 516 and EMIT 520 are the same as in the embodiment illustrated in Fig. 4. The peripherals 514, 516 as well as the EMIF in alternative embodiments may be located outside the ASIC 500.

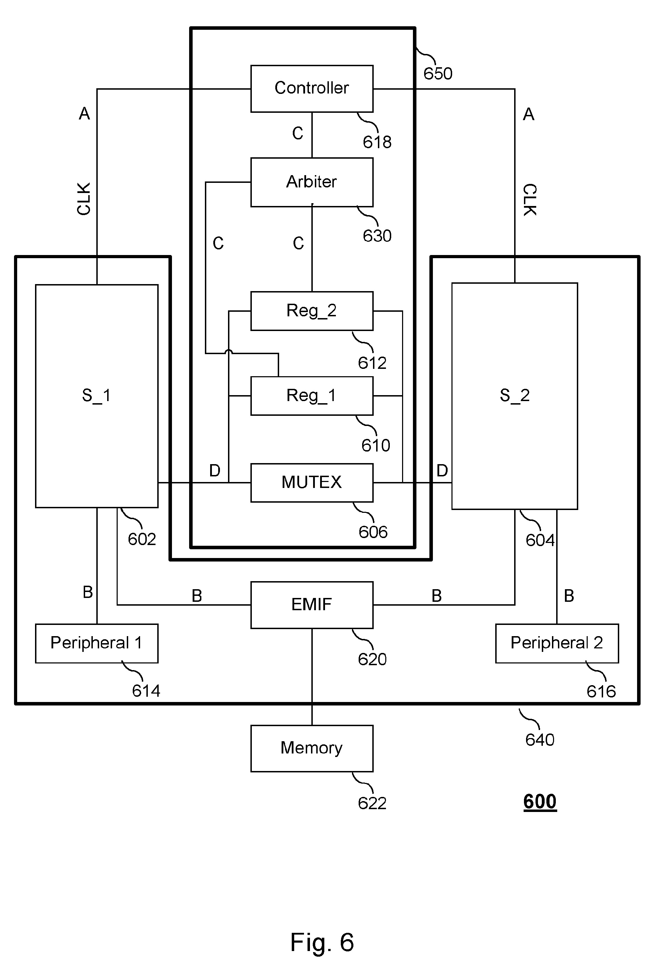

Fig. 6 depicts an electronic device 600 comprising two ASICs: power management ASIC 650 and digital ASIC 640. The digital ASIC 640 comprises a first subsystem 602 and a second subsystem 604 as well as, optionally, peripherals (also referred to as private resources) 614 and 616 and a shared resource - EMIT 620 for accessing a memory 622. The power management ASIC 640 comprises a controller 618, an arbiter 630, first and second registers 610 and 612 as well as a mutex 606. The functions and operations of the components of the two ASICs is the same as those of the device 500 illustrated in Fig. 5. Connections between the subsystems 602 and 604 use I2C interface.

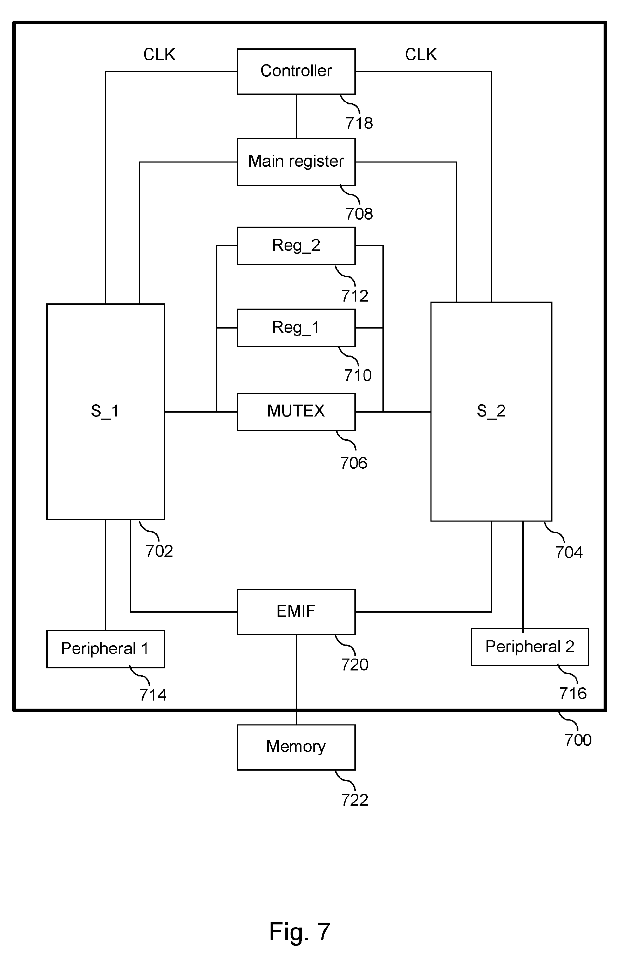

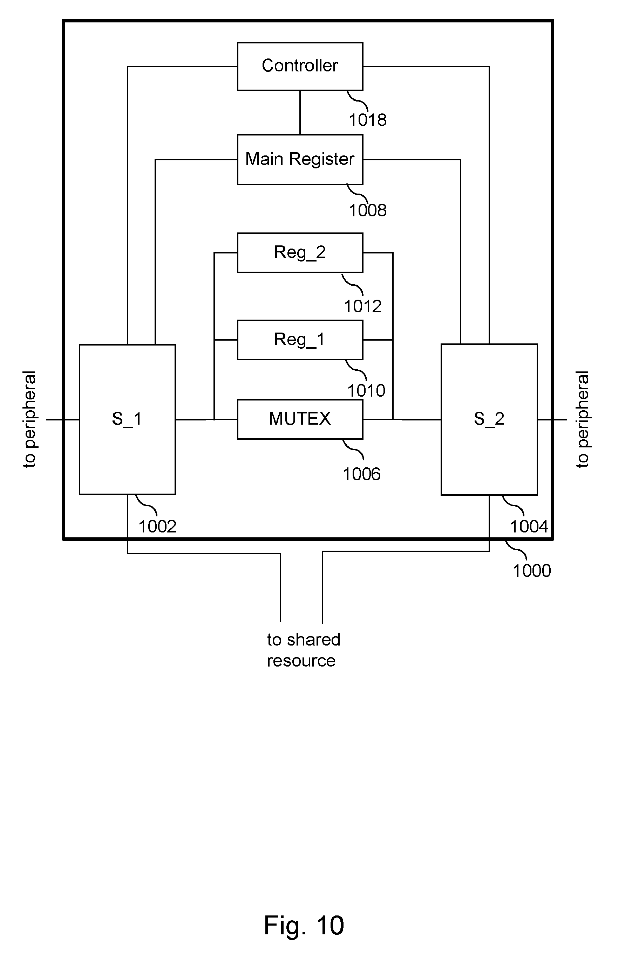

Fig. 7 presents an electronic device 700 realised in form of a single ASIC. Components and functions illustrated in Fig. 7 correspond to those of a two ASIC realisation illustrated in Fig. 4. There are possible various embodiments of the present invention, where the peripherals and/or shared resources are located within the ASIC or outside, or some of them located within and some outside. An alternative embodiment of this device, with peripherals and shared resources located outside the ASIC, is shown in Fig. 10.

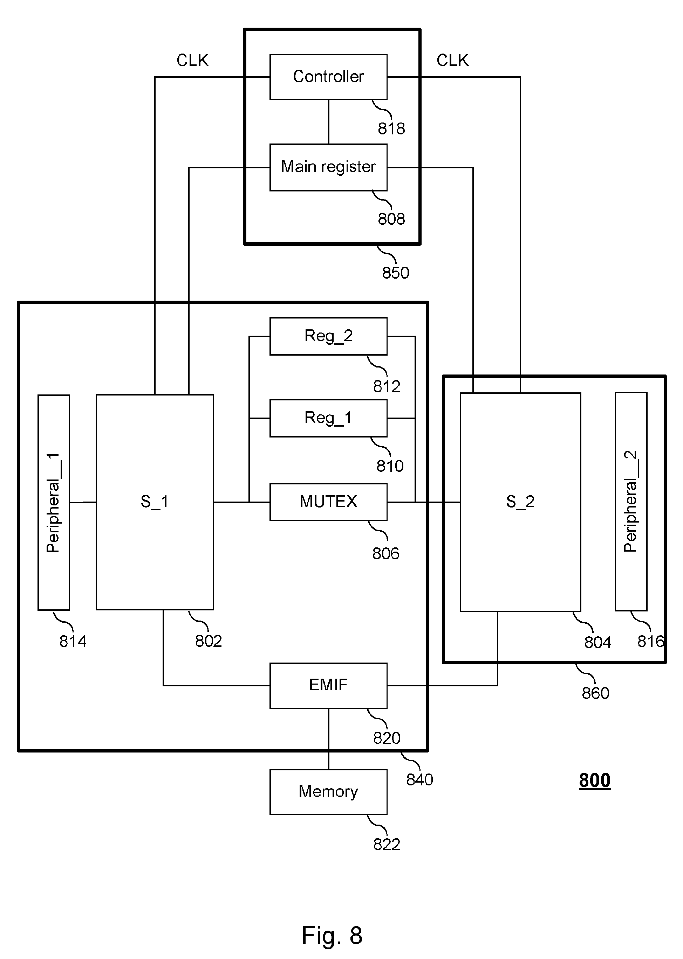

Fig. 8 illustrates yet another embodiment of an electronic device 800 according to the present invention. In this embodiment the device 800 comprises three ASICs 840, 850 and 860. A first digital ASIC 840 comprises a first subsystem 802, a mutex 806, first and second registers 810, 812 and optionally a peripheral 814 and a shared resource - EMIF 820. A second digital ASIC 860 comprises a second subsystem 804 and, optionally, a second peripheral 816. A power management ASIC 850 comprises a controller 818 and a main register 808. Functions of these components correspond to those of components illustrated in Fig. 4 or in Fig. 7. Connections between ASICs 840, 850 and 860 are realised in one embodiment as I2C interfaces.

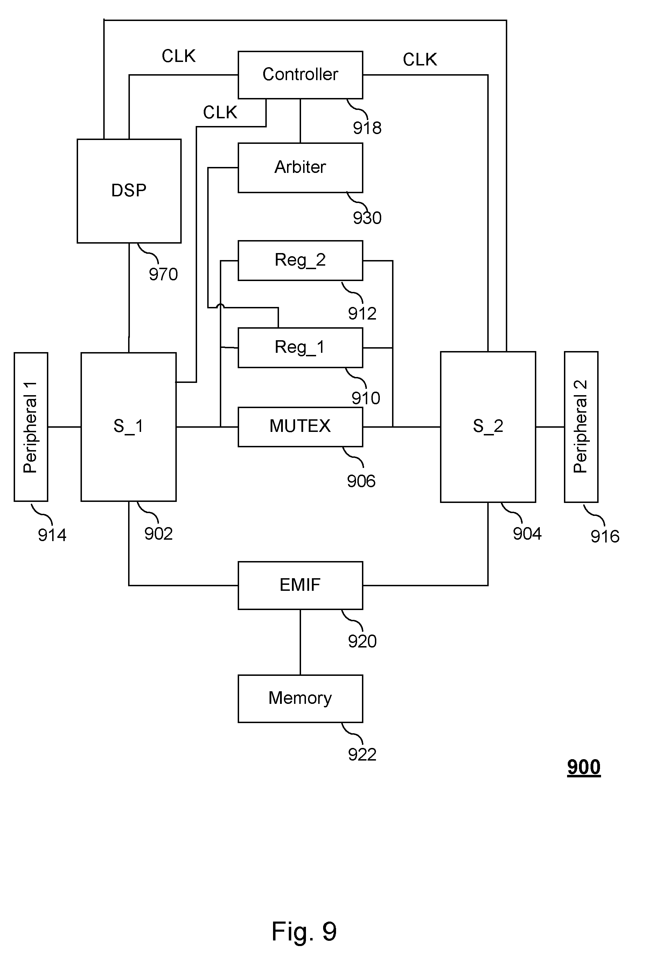

Fig. 9 depicts an electronic device 900 realised in form of a single ASIC. The device 900 and its components correspond to device 500 illustrated in Fig. 5. The device 900, when compared to device 500, comprises additional shared resource - a Digital Signal Processor 970 connected to subsystems 902 and 904. DSP 900 is also connected to a controller 918 and receives from said controller clock and power control signals. Connections between the DSP 970 and the first 902 and second 904 subsystems are used for transmitting commands and data.

The table below contains descriptions of examples of signals exchanged between various components of the device in accordance with the present invention. The description is made with reference to Fig. 5 and Fig. 6, but is equally applicable to other illustrated embodiments.

| | |
|---|---|
| A | Clock, power supply, or other power management entity (could be body bias voltage, power switch control signal, isolation switch control signal etc) |
| B | On chip bus, allowing the CPU, DMAC, DSP or other processing unit to read and write memory and registers. Common standards are AMBA (with subtypes AXI, AHB, APB and ASB), OCP, Wishbone, but other can also be used. |
| C | Configuration request signals. Some part of this may be ignored by the arbiter and/or controller and only used by the first and second subsystems as "hints" for making the decision in step 108. Also it is worth to note that when using the embodiment with the main register the format of the data in the first register and the second register does not have to match the format of the main register. |
| D | It is possible to use a bus standard for connections between chips, and this solution may be chosen if this is needed for a high performance connection for a different purpose (for example graphics data). Otherwise, it can be implemented using some kind of serial interface such as I2C or SlimBus. |

It is within contemplation of the present invention that in its various embodiments a subsystem of the electronic device may comprise a central processing unit, a digital signal processor, a controller or a peripheral device, or any combination of these.

There are more possible embodiments of the electronic device in accordance with the present invention all of them comprise a register or registers where configuration request is written in order to be read by a controller or arbiter for application to the device. However, writing a configuration request to a register is governed by the method of the invention.

The embodiments presented use an example of clock signal being provided from a controller to the subsystems. However, the invention is not limited to devices, which share clock generation, it can also be, for example, shared power management or other resource.

## Claims

1. A method of controlling access rights for changing configuration of an electronic device comprising at least two subsystems, a mutex and a plurality of registers, wherein the subsystems share the same resource; the method comprising the steps of:
a) locking (106) the mutex by said first subsystem if a status of said mutex is free (102), wherein locking said mutex prevents a second subsystem from attempting to change said configuration;
b) checking (108) if the new configuration will adversely affect said second subsystem and if said checking shows that there is no adverse effect on said second subsystem then
c) writing (116) said new configuration setting to a register for storing a configuration request.

2. The method according to claim 1 further comprising releasing (118) the mutex.

3. The method according to claim 1 or claim 2 comprising the steps of:
b1) requesting (110) from the second subsystem changing mode of operation if said checking shows that said change of configuration will adversely affect the second subsystem;
b2) waiting for response (114) from the second subsystem, wherein the response indicates that it is safe to modify configuration of said device;
c) writing (116) said new configuration setting to said main register.

4. The method according to claim 3, wherein the response from said second subsystem indicates that peripheral devices used by said second subsystem has been reconfigured (112) to work with said new configuration parameters.

5. The method according to any one of preceding claims, wherein said change of configuration by a first subsystem includes exiting a sleep mode by said first subsystem.

6. The method according to any one of preceding claims, wherein said step of checking comprises inspecting register assigned to the second subsystem and used for storing information about current state of the second subsystem.

7. The method according to any one of preceding claims comprising generating an interrupt when the mutex is released to any subsystem that has so requested.

8. The method according to any one of preceding claims, comprising reading configuration requests stored in registers and selecting a most demanding configuration request to be applied in operation of the device.

9. An electronic device (200) comprising at least two subsystems (202, 204) using the same operating parameters, a plurality of registers (208, 210, 212) assigned to said subsystems and adapted to store a configuration request defining new configuration parameters for said subsystems as well as to store current state of corresponding subsystems, the device (200) further comprises a mutex (206) connected to each of said subsystems (202, 204), wherein if said mutex (206) is locked by a first subsystem (202) said first subsystem is adapted to read a second register (212) assigned to a second subsystem (204) and used for storing current state of the second subsystem, and further adapted to write new configuration parameters to said register (208) for storing said configuration request if the new configuration parameters do not have adverse effect on said second subsystem (204).

10. The device according to claim 9, wherein each subsystem has assigned one register for storing configuration request and one register for storing current state of said subsystem.

11. The device according to claim 9 comprising a main register (208) accessible by all subsystems and adapted to store said configuration request.

12. The device according to any one of claims 9 to 11, wherein the first subsystem is adapted to release the mutex after writing the new configuration parameters into said register for storing configuration request.

13. The device according to any one of claims 9 to 12, wherein if the new configuration parameters have adverse effect on said second subsystem the first subsystem is adapted to request from the second subsystem changing mode of operation of said second subsystem and to modify said register for storing configuration request after receiving a response from the second subsystem, wherein the response indicates that it is safe to change configuration of said electronic device.

14. The device according to claim 13, wherein said second subsystem is adapted to reconfigure at least one peripheral device in response to the request from said first subsystem.

15. The device according to any one of claims 9 - 14, wherein said device is a Application Specific Integrated Circuit.

16. The device according to claim 9 or 10 further comprising an arbiter adapted to read configuration requests stored in registers and to select a most demanding configuration request to be applied in operation of the device.

## Amended claims

### Amended claims in accordance with Rule 137(2) EPC.

**1.** A method of controlling access rights for changing configuration of an electronic device comprising at least two subsystems, a mutex and a plurality of registers, wherein the subsystems share the same resource; the method comprising the steps of:
a) locking (106) the mutex by said first subsystem if a status of said mutex is free (102), wherein locking said mutex prevents a second subsystem from attempting to change said configuration;
b) checking (108) before implementing the new configuration if the new configuration will adversely affect said second subsystem and if said checking shows that there is no adverse effect on said second subsystem then
c) writing (116) said new configuration setting to a register for storing a configuration request.

**2.** The method according to claim 1 further comprising releasing (118) the mutex and/or wherein the step of checking comprises inspecting a register for storing information about current state of the second subsystem if a change of mode of operation of the second subsystem is necessary in order to implement the new configuration.

**3.** The method according to claim 1 or claim 2 comprising the steps of:
b1) requesting (110) from the second subsystem changing mode of operation if said checking shows that said change of configuration will adversely affect the second subsystem;
b2) waiting for response (114) from the second subsystem, wherein the response indicates that it is safe to modify configuration of said device;
c) writing (116) said new configuration setting to said main register.

**4.** The method according to claim 3, wherein the response from said second subsystem indicates that peripheral devices used by said second subsystem has been reconfigured (112) to work with said new configuration parameters.

**5.** The method according to any one of preceding claims, wherein said change of configuration by a first subsystem includes exiting a sleep mode by said first subsystem.

**6.** The method according to any one of preceding claims, wherein said step of checking comprises inspecting register assigned to the second subsystem and used for storing information about current state of the second subsystem.

**7.** The method according to any one of preceding claims comprising generating an interrupt when the mutex is released to any subsystem that has so requested.

**8.** The method according to any one of preceding claims, comprising reading configuration requests stored in registers and selecting a most demanding configuration request to be applied in operation of the device.

**9.** An electronic device (200) comprising at least two subsystems (202, 204) using the same operating parameters, a plurality of registers (208, 210, 212) assigned to said subsystems and adapted to store a configuration request defining new configuration parameters for said subsystems as well as to store current state of corresponding subsystems, the device (200) further comprises a mutex (206) connected to each of said subsystems (202, 204), wherein if said mutex (206) is locked by a first subsystem (202) said first subsystem is adapted to read a second register (212) assigned to a second subsystem (204) and used for storing current state of the second subsystem to check before implementing the new configuration if the new configuration will adversely affect said second subsystem, and further adapted to write new configuration parameters to said register (208) for storing said configuration request if the new configuration parameters do not have adverse effect on said second subsystem (204).

**10.** The device according to claim 9, wherein each subsystem has assigned one register for storing configuration request and one register for storing current state of said subsystem.
